# EUROPEAN PATENT SPECIFICATION

(11) **EP 3 336 629 B1**
(45) Date of publication and mention of the grant of the patent: **26.07.2023**
(21) Application number: 17206309.1
(22) Date of filing: 11.12.2017
(51) Int. Cl.: G05B 19/4093, G05B 19/4097

(54) **MACHINING SYSTEM AND PROGRAM**
BEARBEITUNGSSYSTEM UND PROGRAMM
SYSTÈME ET PROGRAMME D'USINAGE

(30) Priority: 13.12.2016 JP 2016241063
(43) Date of publication of application: 20.06.2018
(60) Divisional application: 23179841.4
(73) Proprietor: Roland DG Corporation, Shizuoka 431-2103 (JP)
(72) Inventor: SUYAMA, Akihiro, Hamamatsu-shi, Shizuoka 431-2103 (JP)
(74) Representative: Grünecker Patent- und Rechtsanwälte PartG mbB

(56) References cited:
- JP-A- 2002 283 191
- US-A1- 2012 116 570

## Description

### Technical field

The present invention relates to machining systems and programs that can be executed by a computer provided in the machining systems.

### Background art

Patent applications JP 2002 283191 A and US 2012/116570 A1 disclose examples of the prior art.

Japanese Patent No. 3967557 discloses an automatic tool determination device that is applied to a computer aided design (CAD)/computer aided manufacturing (CAM) system. The automatic device selects and determines a most appropriate tool from a plurality of tools according to the machining conditions provided.

However, the technique disclosed in Japanese Patent No. 3967557 requires a user to attach a most appropriate tool, which was determined by the automatic tool determination device, to a machine tool before it can perform machining operations on the workpiece.

If the machine tool has an automatic changer, the determined most appropriate tool is attached to the machine tool using the changer. The user, however, should attach the most appropriate tool to the changer prior to the automatic attachment to the machine tool. At times, the most appropriate tool is attached to the changer beforehand. Even in such a scenario, it is necessary for the user to designate a most appropriate tool from among these tools to allow the changer to recognize the most appropriate tool because the changer is also provided with other tools. Alternatively, it is necessary for the user to re-attach the most appropriate tool to another position where it will be picked up using the changer the next time.

The present invention was made with respect to the above circumstances, and a problem to be solved by the present invention is to eliminate the necessity of attaching the cutting tool after selecting the most appropriate cutting tool.

The invention is defined by the independent claims.

The dependent claims define advantageous embodiments.

Other features of the present invention will be clarified by the description of the specification and the drawings described later.

According to the present invention, it is possible to eliminate the necessity for a user to store a most appropriate cutting tool in a specific storage space after that cutting tool and its tool ID have been selected. In other words, even after the cutting tools have been placed in the storage spaces by the user, the most appropriate cutting tool held in the storage space provided with the storage space identifier that is the same as the designated identifier is picked up by the machining device and a workpiece can be machined by the machining device.

### Brief description of the drawings

Fig. 1 is a block diagram of a machining system;
Fig. 2 is a perspective view of the machining system;
Fig. 3 is an enlarged perspective view of the inside of a machining device; and
Fig. 4 shows flowcharts illustrating process flows in first and second computers of the machining system.

### Detailed description of the invention

At least the following embodiments will be shown according to the description and drawings described below.

In all embodiments, a plurality of storage spaces are disposed on a magazine, a workpiece is held by a holder, and the magazine is closely positioned to a holder, one of a plurality of cutting tools is attached to a tool holder, wherein the direction in which the cutting tool is attached to the tool holder is the same as the direction in which tools are stored in the magazine.

A machining system including: a machining device for picking up one of a plurality of cutting tools, each of cutting tools held in respective one of a plurality of storage spaces and machining a workpiece with the picked-up cutting tool; an operation control device for controlling the machining device; and a tool path generator for generating tool path data for causing the machining device to perform a machining operation; the operation control device including: receiving means for receiving a tool identifier with the tool identifier correlated to one of storage space identifiers, each of the tool identifiers being assigned to a respective one of the plurality of cutting tools, each of the storage space identifiers being assigned to a respective one of the plurality of storage spaces; and correlation table creating means for creating a correlation table in which the tool identifiers received by the receiving means are correlated with the storage space identifiers, respectively; the tool path generator including: first acquisition means for acquiring the correlation table created by the correlation table creating means; second acquisition means for acquiring shape data and a machining condition for the workpiece; generating means for generating the tool path data based on the shape data and the machining condition; selecting means for selecting, based on the shape data and the machining condition, a tool identifier of the most appropriate tool from among the tool identifiers in the correlation table acquired by the first acquisition means; and designating means for designating, as a designated identifier, the storage space identifier correlated in the correlation table to the tool identifier selected by the selecting means will be shown.

Preferably, a cutting tool in a storage space assigned with the same storage space identifier as the designated identifier designated by the designating means is picked up by the machining device.

According to the machining system described above, the correlation table created by the correlation table creating means of the operation control device represents a relationship between the storage spaces and cutting tools held in the respective one of the storage spaces. Since the correlation table is acquired by the first acquisition means of the tool path generator, the relationship between the storage spaces and the cutting tools held therein is shared between the tool path generator and the operation control device. The tool identifier selected by the selecting means of the tool path generator is in the correlation table, so that a most appropriate cutting tool to which that tool identifier is assigned has been stored in one of the storage spaces and the storage space identifier correlated with that tool identifier is designated as the designated identifier. Thus, the cutting tool stored in the storage space provided with the same storage space identifier as the designated identifier is picked up by the machining device, and the workpiece can be machined by the machining device. Accordingly, it is possible to eliminate the necessity for a user to store a most appropriate cutting tool in a specific storage space after that cutting tool and its tool ID have been selected.

Preferably, the tool path generator further includes list generating means for generating a list of the tool identifiers for all cutting tools registered; and a tool identifier assigned to a respective one of the plurality of cutting tools is received by the receiving means from the list generated by the list generating means.

According to the machining system described above, the tool identifiers of the all cutting tools registered are shared between the tool path generator and the operation control device.

A machining system including: a machining device for picking up one of a plurality of cutting tools, each of cutting tools held in respective one of a plurality of storage spaces and machining a workpiece with the picked-up cutting tool; and an operation control device for controlling the machining device and generating tool path data for causing the machining device to perform a machining operation; the operation control device including: receiving means for receiving a tool identifier with the tool identifier correlated to one of storage space identifiers, each of the tool identifiers being assigned to a respective one of the plurality of cutting tools, each of the storage space identifiers being assigned to a respective one of the plurality of storage spaces; correlation table creating means for creating a correlation table in which the tool identifiers received by the receiving means are correlated with the storage space identifiers, respectively; first acquisition means for acquiring the correlation table created by the correlation table creating means; second acquisition means for acquiring shape data and a machining condition for the workpiece; generating means for generating the tool path data based on the shape data and the machining condition; selecting means for selecting, based on the shape data and the machining condition, a tool identifier of the most appropriate tool from among the tool identifiers in the correlation table acquired by the first acquisition means; and designating means for designating, as a designated identifier, the storage space identifier correlated in the correlation table to the tool identifier selected by the selecting means will be shown.

Preferably, a cutting tool in a storage space assigned with the same storage space identifier as the designated identifier designated by the designating means is picked up by the machining device.

Preferably, the operation control device further includes list generating means for generating a list of the tool identifiers for all cutting tools registered; and a tool identifier assigned to a respective one of the plurality of cutting tools is received by the receiving means from the list generated by the list generating means.

According to the machining system described above, the correlation table created by the correlation table creating means of the operation control device represents a relationship between the storage spaces and cutting tools held in the respective one of the storage spaces. The tool identifier selected by the selecting means of the operation control device is in the correlation table, so that a most appropriate cutting tool to which that tool identifier is assigned has been stored in one of the storage spaces and the storage space identifier correlated with that tool identifier is designated as the designated identifier. Thus, the cutting tool stored in the storage space provided with the same storage space identifier as the designated identifier is picked up by the machining device, and the workpiece can be machined by the machining device. Accordingly, it is possible to eliminate the necessity for a user to store a most appropriate cutting tool in a specific storage space after that cutting tool and its tool ID have been selected.

A program for making a computer that designates, to a machining device for picking up one of a plurality of cutting tools, each of cutting tools being held in respective one of a plurality of storage spaces and machining a workpiece with the picked-up cutting tool, one storage space from which a cutting tool is picked up among the plurality of storage spaces, function as: first acquisition means for acquiring a correlation table in which the storage space identifiers assigned to the plurality of storage spaces are correlated with the tool identifiers assigned to the plurality of cutting tools; second acquisition means for acquiring shape data and a machining condition for the workpiece; selecting means for selecting, based on the shape data and the machining condition, a tool identifier of the most appropriate tool from among the tool identifiers in the correlation table; and designating means for designating, as a designated identifier, the storage space identifier correlated in the correlation table to the tool identifier of the most appropriate tool selected by the selecting means will be shown.

Preferably, the program makes the computer function as list generating means for generating a list of the tool identifiers for all cutting tools registered.

According to the program described above, the correlation table representing a relationship between the storage spaces and the cutting tools held in the respective one of the storage spaces is acquired by the first acquisition means of the computer, and the tool identifier selected by the selecting means of that computer is in the correlation table, so that a most appropriate cutting tool to which that tool identifier is assigned has been stored in one of the storage spaces and the storage space identifier correlated with that tool identifier is designated as the designated identifier. Thus, the cutting tool stored in the storage space provided with the same storage space identifier as the designated identifier is picked up by the machining device, and the workpiece can be machined by the machining device. Accordingly, it is possible to eliminate the necessity for a user to store a most appropriate cutting tool in a specific storage space after that cutting tool and its tool ID have been selected.

### === Embodiments ===

Referring to the drawings, an embodiment of the present invention is described. Technically preferable limitations are, however, given to the embodiments described below to implement the present invention. Therefore, the scope of the present invention is not limited to the following embodiments and illustrative examples.

### <Machining system>

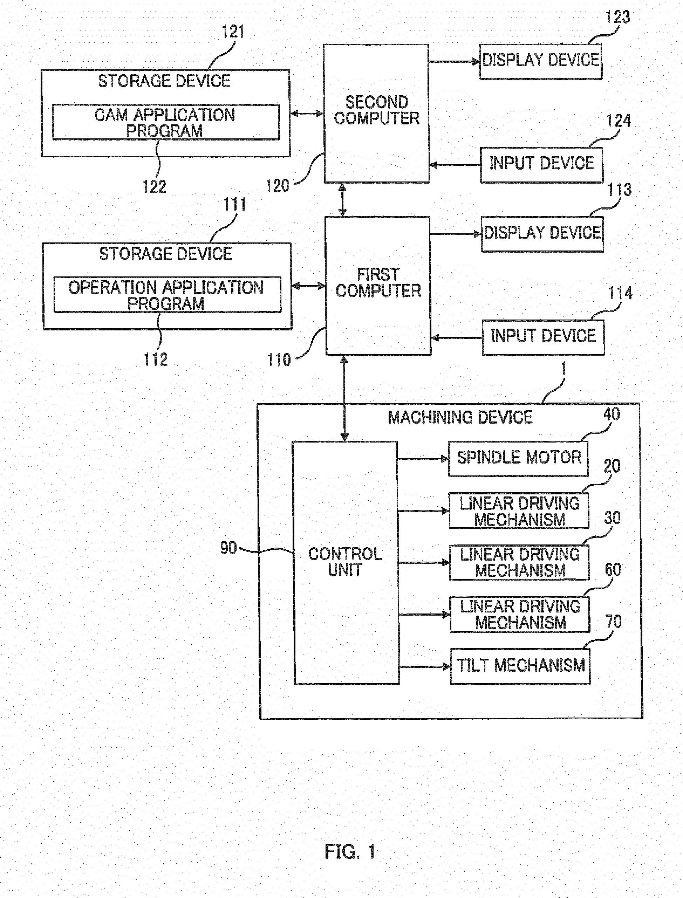

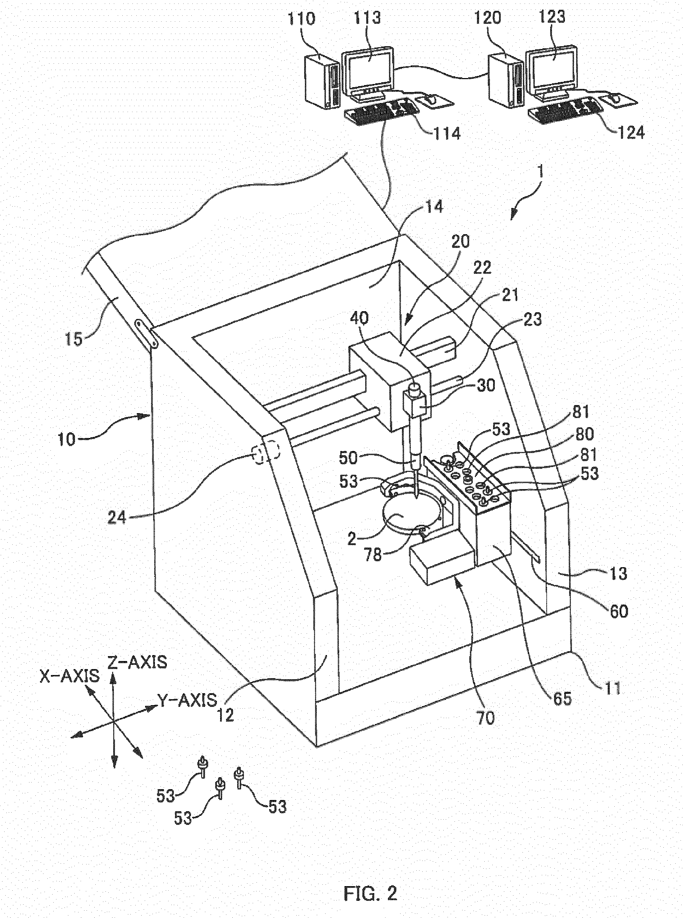

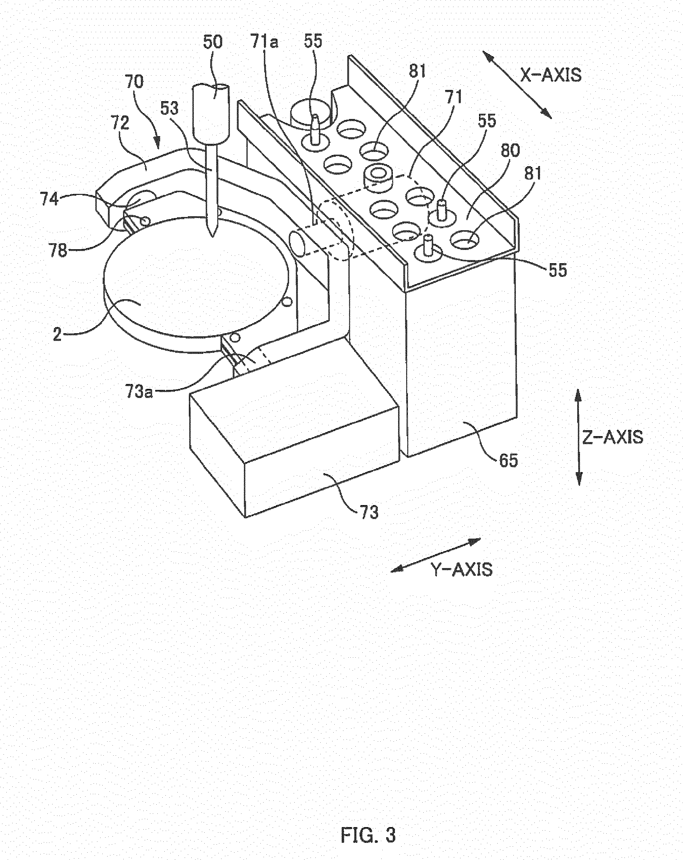

Figs. 1 and 2 are a block diagram and a perspective view, respectively, of a machining system and Fig. 3 is an enlarged perspective view of the inside of a machining device 1. In Figs. 2 and 3, the X-, Y-, and Z-axes are shown as support lines representing the directions, and these axes are perpendicular to each other. The directions aligned with the X- and Y-axes are parallel to the horizontal and the direction aligned with the Z-axis is parallel to the vertical. The X-axis may be inclined at an angle from the horizontal and the Z-axis may be inclined at an angle from the vertical.

The machining system has the machining device 1, a plurality of cutting tools 53, a first computer (operation control device) 110, and a second computer (tool path data generator) 120. In Fig. 1, the computers 110 and 120 are illustrated on a reduced scale compared to the machining device 1.

### <Machining device>

As shown in Figs. 2 and 3, the machining device 1 is a device for machining a disc-shaped workpiece 2. The machining device 1 has a housing 10, a spindle motor 40, a tool holder (spindle) 50, a tilt mechanism 70, a holder 78, a magazine 80, a three-dimensional displacement mechanism, and a control unit 90 (see, Fig. 1).

The control unit 90 shown in Fig. 1 is an NC servo controller having various driving circuits (such as a motor driver), a microcomputer, and the like.

As shown in Fig. 2, the housing 10 has a box-like shape. A door 15 is provided over an opening in the top and front sides of the housing 10 to open and close the opening.

The three-dimensional displacement mechanism is for driving the tool holder 50 in order to move it in the X-, Y- and Z-directions relative to the holder 78 on which the workpiece 2 is loaded and the magazine 80 on which the cutting tools 53 are stored. Specifically, as shown in Figs. 1 and 2, the three-dimensional displacement mechanism is provided with a Z-directional linear driving mechanism 30 that drives the tool holder 50 in order to move it in the Z-direction that is parallel to the rotation shaft of the spindle motor 40, a Y-directional linear driving mechanism 20 that drives the tool holder 50 in order to move it in the Y-direction, and an X-directional linear driving mechanism 60 that moves the holder 78 and the magazine 80 in order to move them in the X-direction.

The Y-directional linear driving mechanism 20 has a linear guide member 21, a carriage 22, a Y-directional linear transmission mechanism 23, and a motor 24. The both ends of the linear guide member 21 are supported by side sections 12 and 13 of the housing 10 so that the linear guide member 21 is held and extends between the side sections 12 and 13. The direction in which the linear guide member 21 extends is aligned with the Y-direction. The carriage 22 is slidably attached to the linear guide member 21. The carriage 22 is provided so that it can be moved in the Y-direction along the linear guide member 21. The carriage 22 is connected to the Y-directional linear transmission mechanism 23. The Y-directional linear transmission mechanism 23 is connected to the motor 24. The Y-directional linear transmission mechanism 23 is disposed between the side sections 12 and 13, and the motor 24 is disposed on the side section 12. The Y-directional linear transmission mechanism 23 is, for example, a belt transmission mechanism, a chain transmission mechanism, a ball screw transmission mechanism or a rack-and-pinion mechanism. The power of the motor 24 is transmitted to the carriage 22 via the Y-directional linear transmission mechanism 23 and therefore, the carriage 22 is moved in the Y-direction by the motor 24.

As shown in Figs. 2 and 3, the carriage 22 is provided with the linear driving mechanism 30, the spindle motor 40, and the tool holder 50. Specifically, the linear driving mechanism 30 and the spindle motor 40 are attached to the carriage 22 and the tool holder 50 is connected to the spindle motor 40 and the linear driving mechanism 30 via a transmission mechanism. The linear driving mechanism 30 drives the tool holder 50 in order to move it in the Z-direction and the spindle motor 40 drives the tool holder 50 on the rotation shaft that is parallel to the Z-axis.

To the tool holder 50, one selected cutting tool 53 is attached. This cutting tool 53 can be attached to and removed from the tool holder 50. Other cutting tools 53 that would be changed are mounted on the magazine 80 described later. Some cutting tools 53 cannot be mounted on the tool holder 50 and the magazine 80 at once, and such cutting tools 53 are left outside the housing 10. These cutting tools 53 may be, for example, an end mill, a drill, a reamer, and a tap.

Each cutting tool 53 is provided with an identifier (hereinafter, referred to as a tool ID). The tool IDs may or may not be displayed on the cutting tools 53. Each tool ID represents the attribute of the cutting tools 53 and the cutting tools 53 are sorted based on their tool IDs. The tool ID is represented by, for example, a tool number, name, diameter, size, shape, type, material, use, manufacturer or a combination of two or more of them, and the cutting tools 53 provided with the same ID belong to the same attribute. The tool ID may be unique for each cutting tool 53 or two or more cutting tools 53 may be provided with the same tool ID.

The X-directional linear driving mechanism 60 is attached to the side section 13 of the housing 10 so that the X-directional linear driving mechanism 60 is aligned parallel to the X-axis. The linear driving mechanism 60 is connected to a moving unit 65. The linear driving mechanism 60 drives the moving unit 65 in order to move it in the X-direction.

To the moving unit 65, the tilt mechanism 70 and the holder 78 are attached. The holder 78 is for holding the plate-like workpiece 2. The workpiece 2 may be held directly by the holder 78 or the workpiece 2 may be loaded into a cassette and the cassette may be held by the holder 78. The workpiece 2 is made of, for example, a sintered material (e.g., a ceramic material such as a zirconia ceramic material), a resin material, a glass material, a metal material, or a wax material.

The tilt mechanism 70 is for turning the holder 78 and the workpiece 2 on a first rotation shaft that is parallel to the Y-axis and turning the holder 78 and the workpiece 2 on a second rotation shaft that is perpendicular to the first rotation shaft. Specifically, the tilt mechanism 70 has a first motor for turn movement 71, a turn stick 72, and a second motor for turn movement 73. The motor 71 is disposed in the moving unit 65 so that its output rotation shaft (first rotation shaft) 71a is aligned parallel to the Y-axis. The output rotation shaft 71a of the motor 71 extends from the inside to the outside of the moving unit 65 in the Y-direction. The output rotation shaft 71a of the motor 71 is connected to the center of the arch-like turn stick 72. The second motor for turn movement 73 is attached to a periphery of one end of the turn stick 72. An output rotation shaft (second rotation shaft) 73a of the motor 73 passes inward through the one end of the turn stick 72. The output rotation shaft 73a of the motor 73 is perpendicular to the output rotation shaft 71a of the motor 71. The output rotation shaft 73a of the motor 73 is connected to one end of an arch-like holder 78. The other end of the holder 78 is connected to the other end of the turn stick 72 through a rotation shaft 74 coaxial with the output rotation shaft 73a of the motor 73. The holder 78 holds the perimeter of the workpiece 2 by, for example, magnetic attraction, suction, clamping, locking or engagement.

When the motor 71 is operated, the turn stick 72, the holder 78, and the workpiece 2 are turned about the output rotation shaft 71a. When the motor 73 is operated, the holder 78 and the workpiece 2 are turned about the output rotation shaft 73a.

The magazine 80 is provided on the top surface of the moving unit 65. The magazine 80 has a plurality of storage spaces 81 formed in the top surface thereof, and each storage space has a shape of a hole, concave, or bore. The cutting tools 53 are stored in the storage spaces 81 in the standing posture.

Since each storage space 81 is provided with a unique identifier (hereinafter, referred to as a storage space ID), the storage spaces 81 can be discriminated from each other by the storage space IDs. The storage space IDs are, for example, numerals.

### <Type of operations of the machining device>

The linear driving mechanism 20 (in particular, the motor 24), the linear driving mechanism 30, the spindle motor 40, the linear driving mechanism 60 and the tilt mechanism 70 (in particular, the motors 71 and 73) are controlled by the control unit 90, thereby the machining device 1 performs the following tool pick-up operation, tool removal operation, tool change operation, and machining operation.

### <Tool pick-up operation>

The tool pick-up operation is performed in response to the transfer of a designated identifier (hereinafter, referred to as a designated ID) from the first computer 110 to the control unit 90 when no cutting tool 53 is attached to the tool holder 50. The designated ID is for designating one of the plurality of cutting tools 53. The cutting tool 53 in the storage space 81 to which the storage space ID that is the same as the designated ID is assigned is designated. The computers 110 and 120 and the designated ID will be described later in detail.

When the designated ID is transferred to the control unit 90, the linear driving mechanisms 20 and 60 are controlled by the control unit 90. As a result, the tool holder 50 is positioned over the storage space 81 to which the storage space ID that is the same as the designated ID is assigned. Thereafter, the linear driving mechanism 30 is controlled by the control unit 90, and the tool holder 50 is lowered by the linear driving mechanism 30. As a result, the cutting tool 53 stored in the storage space 81 to which the storage space ID that is the same as the designated ID is assigned is attached to the tool holder 50. Then, after the tool holder 50 is moved up by the linear driving mechanism 30 while holding the cutting tool 53, the tool holder 50 is moved to a position above the workpiece 2 by the linear driving mechanism 20. Thus, one cutting tool 53 is picked up from the magazine 80.

### <Tool removal operation>

The tool removal operation is for placing the cutting tool 53 in an empty storage space 81 in the magazine 80 when the cutting tool 53 is already attached to the tool holder 50.

The linear driving mechanisms 20 and 60 are controlled by the control unit 90, and the tool holder 50 is positioned over an empty storage space 81. Here, the storage space ID assigned to the empty storage space 81 is correlated beforehand with the tool ID assigned to the cutting tool 53 attached to the tool holder 50. Therefore, since the control unit 90 can recognize the empty storage space 81 by the storage space ID, the tool holder 50 is positioned over the empty storage space 81 as described above. The correlation between the storage space ID of the storage space 81 and the tool ID of the cutting tool 53 will be described in detail later.

Thereafter, the linear driving mechanism 30 is controlled by the control unit 90, and the tool holder 50 is lowered by the linear driving mechanism 30. As a result, the cutting tool 53 attached to the tool holder 50 is placed in the empty storage space 81. Thereafter, the linear driving mechanism 30 is controlled by the controller 90, and the tool holder 50 is moved up by the linear driving mechanism 30. As a result, the tool holder 50 is separated from the cutting tool 53.

### <Tool change operation>

The tool change operation is performed in response to the transfer of a designated ID from the first computer 110 to the control unit 90 when the cutting tool 53 is already attached to the tool holder 50. The tool change operation is a combination of the tool removal operation and the subsequent tool pick-up operation described above.

### <Machining operation>

A machining operation is described. The machining operation is performed after the tool pick-up operation or the tool change operation mentioned above.

With being driven by the spindle motor 40, the tool holder 50 and the cutting tool 53 attached to it are moved in the Y-direction by the linear driving mechanism 20 and moved up by the linear driving mechanism 30. The workpiece 2 and the holder 78 are moved in the X-direction by the linear driving mechanism 60. As a result, a relative 3D position of the tip of the cutting tool 53 to the center of the workpiece 2 (the intersection between the first and second rotation shaft of the tilt mechanism 70) is changed. When the cutting tool 53 contacts the workpiece 2 during the displacement, the workpiece 2 is cut with the cutting tool 53. Furthermore, while the workpiece 2 is being cut, the holder 78 and the workpiece 2 are turned by the tilt mechanism 70 about the output rotation shafts 71a and 73a of the motors 71 and 73, respectively, changing the posture of the workpiece 2. This changes a contact angle between the cutting tool 53 and the workpiece 2.

The control unit 90 controls, according to tool path data, the linear driving mechanisms 20, 30, and 60, and the tilt mechanism 70 using the numerical control (NC) to displace the tip of the cutting tool 53 relative to the center of the workpiece 2. The tool path data is composed of data in which relative 3D positions and inclined angles of the tip of the cutting tool 53 to the center of the workpiece 2 are sorted in the order of time and data in which velocities at these positions (i.e., velocities of the linear driving mechanisms 20, 30, and 60, and the tilt mechanism 70) are sorted in the order of time. The tool path data is generated by the first computer 110 and transferred from the second computer 120 to the control unit 90 through the first computer 110.

### <First computer (operation control device) and second computer (tool path generator)>

As shown in Figs. 1 and 2, the first computer 110 has, for example, a CPU, a CPU, a ROM, a RAM, a bus, and a hardware interface. The first computer 110 also has an onboard storage device 111 such as a semiconductor memory or a hard disk drive on which the first computer 110 can read and write data. The first computer 110 is connected to a display device 113 and an input device 114. The display device 113 is a display for displaying screens. The input device 114 may be a touch panel, a switch, a keyboard, a pointing device, an optical reader (such as a one-dimensional code reader and a two-dimensional code reader), a magnetic reader, or a wireless reader (such as an RFID reader).

The first computer 110 is connected to the control unit 90 of the machining device 1. Signals and data are transmitted between the first computer 110 and the control unit 90. The first computer 110 is connected to the second computer 120. Signals and data are transmitted between the first computer 110 and the second computer 120.

The second computer 120 is configured as in the first computer 110. The second computer 120 has an onboard storage device 121 and is connected to a display device 123 and an input device 124.

An operation application program 112 has been installed on the first computer 110. The operation application program 112 is stored on the storage device 111. The operation application program 112 is for causing the first computer 110 to function as an instrument panel (control panel) for the software. Various controls, operations, and settings of the machining device 1 can be achieved by the first computer 110 that functions as the instrument panel for the software.

A CAM application program 122 has been installed on the second computer 120. The CAM application program 122 is stored on the storage device 121. The CAM application program 122 is for causing the second computer 120 to perform an operation to generate tool path data based on shape data (design data and CAD data) for a machined product (such as a dental prosthesis) and a machining condition. The shape data for the machined product is generated beforehand by a CAD application program and stored on the storage device 121. The machining condition may be, for example, the type of a material or materials of the workpiece 2, the thickness of the workpiece 2, the rotation speed of the tool holder 50, or the relative velocity of the tool holder 50 to the center of the workpiece 2. The machining condition is entered by a user via the input device 124.

The CAM application program 122 is for causing the second computer 120 to execute a process of selecting a most appropriate cutting tool 53 (specifically, the tool ID of that cutting tool 53) from among the plurality of cutting tools 53 based on the shape data of the machined product and the machining condition. In selecting the most appropriate cutting tool 53, the options are limited beforehand to the cutting tools 53 stored on the magazine 80. The limitation of the options will be described later in detail.

The CAM application program 122 and the tool IDs of the cutting tools 53 that can be handled by the machining device 1 are registered beforehand in the CAM application program 122.

### <How to use the machining system>

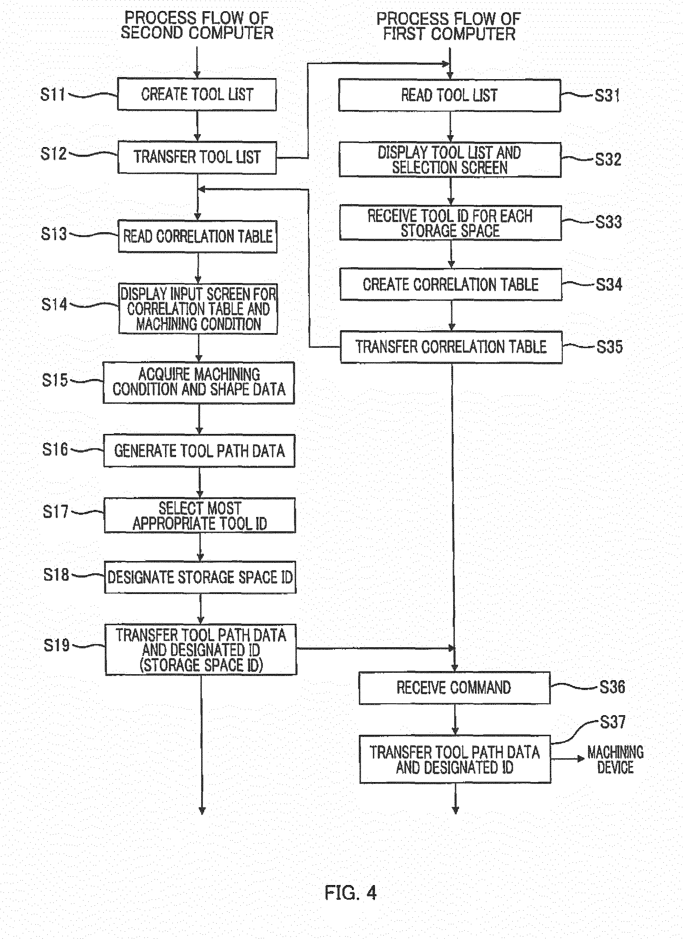

A method of using the machining system is described. At the same time, with reference to Fig. 4, process flows in the computers 110 and 120 when using the machining system are also described. In using the machining system, the process in the first computer 110 is executed according to the program 112, and the process in the second computer 120 is executed according to the program 122.

First, the user loads the cutting tools 53 into the storage spaces 81 in the magazine 80. At this time, the user grasps the relationship between the storage space IDs of the storage spaces 81 and the tool IDs of the cutting tools 53 held in the storage spaces 81.

Next, the first computer 110 activates the operation application program 112 and the second computer 120 activates the CAM application program 122. Then, a tool list is created (exported) by the second computer 120 (step S11). The tool list is a list (inventory) of the tool IDs of the cutting tools 53 that the CAM application program 122 and the machining device 1 can handle. For example, the tool list is comma-delimited text data with tool ID entries.

The created tool list is transferred to the first computer 110 by the second computer 120 (step S12). The first computer 110 reads the tool list and the tool list is imported into the operation application program 112 (step S31). Then, the first computer 110 causes the display device 113 to display the tool list, that is, the tool IDs included in the tool list and causes the display device 113 to display a selection screen (step S32).

The selection screen displayed on the display device 113 is a screen for selecting a tool ID from the tool list. On the selection screen, it is possible to select each storage space ID with being correlated with a tool ID. Accordingly, the user selects and enters, using the input device 114, the tool ID of the cutting tool 53 in the storage space 81 for each storage space ID of the storage spaces 81. Then, the first computer 110 correlates and receives the tool ID for each storage space ID (step S33). As a result, the first computer 110 creates a correlation table (e.g., comma-delimited text data) representing the relationship between the storage space IDs and the tool IDs (step S34).

The correlation table is transferred by the first computer 110 to the second computer 120 (step S35). The second computer 120 reads the correlation table, which is imported into the CAM application program 122 (step S13). The correlation table may be recorded on a portable recording medium (such as a semiconductor memory) by the first computer 110, and the correlation table may be read from the portable recording medium to the second computer 120 after the user removes the portable recording medium from the first computer 110 and attaches it to the second computer 120.

The second computer 120 correlates the storage space IDs with the tool IDs with each other according to the correlation table and causes the display device 123 to display the storage space IDs and the tool IDs (step S14). Furthermore, the second computer 120 causes the display device 123 to display a machining condition input screen (step S14).

The machining condition input screen displayed on the display device 123 is for allowing a user to enter a machining condition or select at least one of the multiple pieces of shape data stored on the storage device 121. On the machining condition input screen, the user enters a machining condition using the input device 124 and selects at least one shape data using the input device 124. Then, the second computer 120 acquires the machining condition and reads the selected shape data from the storage device 121 (step S15).

Next, the second computer 120 generates the tool path data according to the acquired machining condition and shape data (step S16).

Furthermore, the second computer 120 selects the most appropriate tool ID from among the tool IDs in the correlation table (the cutting tools 53 provided with these tool IDs are stored in the storage spaces 81) according to the acquired machining condition and shape data (step S17). Specifically, the second computer 120 calculates the sum of scores (adequacy) for the tool IDs in the correlation table based on the acquired machining condition and shape data, and selects and the tool ID having the largest score as the most appropriate one. Here, since the tool IDs in the correlation table are assigned to the cutting tools 53 stored on the magazine 80, the options are limited to the cutting tools 53 stored on the magazine 80 among all the cutting tools 53 that can be handled by the CAM application program 122.

Next, the second computer 120 refers the correlation table, retrieves the storage space ID correlated with the most appropriate tool ID, and designates it (step S18).

Next, the second computer 120 transfers the retrieved storage space ID as the designated ID to the first computer 110 (step S19). Furthermore, the second computer 120 transfers the generated tool path data to the first computer 110 (step S19). The tool path data and the designated ID may be recorded on a portable recording medium (such as a semiconductor memory) by the second computer 120, and tool path data and the designated ID may be read from the portable recording medium to the first computer 110 after the user removes the portable recording medium from the second computer 120 and attaches it to the first computer 110.

Thereafter, when the user issues a machining command using the input device 114, the first computer 110 receives the machining command (step S36). As a result, the first computer 110 transfers the tool path data and the designated ID to the control unit 90 (step S37).

In the case where the cutting tool 53 is not held by the tool holder 50, the aforementioned tool pick-up operation and the machining operation are sequentially performed in response to the transfer of the designated ID to the control unit 90. On the other hand, when the cutting tool 53 is held by the tool holder 50, the tool change operation and the machining operation are sequentially performed in response to the transfer of the designated ID to the control unit 90.

Then, the cutting tool 53 stored in the storage space 81 having the same storage ID as the designated ID is held by the tool holder 50, and the workpiece 2 is cut by the cutting tool 53.

### <Effects and advantages>

According to the aforementioned embodiment, the following effects can be obtained.
(1) The options are limited to those in the correlation table. That is, the tool ID of a most appropriate cutting tool 53 is selected from among the tool IDs in the correlation table created by the first computer 110 at step S34, rather than being selected from among all tool IDs registered in the CAM application program 122. This correlation table represents a relationship between a plurality of storage spaces 81 and a plurality of cutting tools 53 stored in the respective one of the storage spaces 81. Since this correlation table is transferred from the first computer 110 to the second computer 120 at step S35, the relationship between the storage spaces 81 and the cutting tools 53 is shared between the computers 110 and 120. The tool ID selected by the second computer 120 is in the correlation table, so that the most appropriate cutting tool 53 to which that tool ID is assigned has been stored in one of the storage spaces 81. Then, the storage space ID correlated with the selected most appropriate tool ID is designated by the second computer 120 as the designated identifier (step S18). Therefore, the cutting tool 53 stored in the storage space 81 provided with the same storage space ID as the designated ID is picked up by the machining device I, and the workpiece 2 can be machined by the machining device 1. In other words, the user can store the desired cutting tools 53 in the storage spaces 81 beforehand. Therefore, it is possible to eliminate the necessity for a user to store a most appropriate cutting tool 53 in a specific storage space 81 after that cutting tool 53 and its tool ID have been selected.
(2) A most appropriate cutting tool 53 is selected from among the plurality of cutting tools 53 mounted on the magazine 80 by the user instead of mounting the most appropriate cutting tool 53 on the magazine 80 from among all cutting tools 53 possessed by the user. Therefore, when the user loads a cutting tool 53 onto the magazine 80, the user does not need to pay attention to which cutting tool 53 should be stored in which storage space 81. Therefore, it is possible to reduce human errors.

### <Modified versions>

While the embodiment for implementing the present invention has been described, the aforementioned embodiment is for the purpose of facilitating the understanding of the present invention and is not intended to limit the present invention. Changes from the above embodiment are described below. The following changes may be applied in combination as much as possible.
(1) In the aforementioned embodiment, the CAM application program 122 has been installed on the second computer 120. Instead, the CAM application program 122 may be installed on the first computer 110 and the CAM application 122 may be stored on the storage device 111. In this case, the operations at step S11 and steps 513 to 17 are executed by the first computer 110 and no transfer is made at steps S12, S18, and S35.
(2) In the aforementioned embodiment, the operation application program 112 and the CAM application program 122 are separate software products, but they may be integrated as single software. In this case, that software application program is installed on the first computer 110 and stored on the storage device 111. Furthermore, the operations at step S11 and steps S13 to 17 are executed by the first computer 110 and no transfer is made at steps S12, S18, and S35. Furthermore, since the operation application program 112 and the CAM application program 122 are combined as single software, the import and export operations between the programs 112 and 122 are not performed.
(3) When a user determines that the most appropriate tool ID selected at step S17 is not appropriate, the user may select and input another tool ID from the correlation table using the input device 124. Then, that tool ID is received by the second computer 120, and the tool ID is transferred to the first computer 110 by the second computer 120 as the designated ID. In this case, the second computer 120 records the correlation between the tool ID selected by the user and the machining condition/shape data acquired at step S15 on the storage device 121 and learns the correlation. When the user inputs the same machining condition and shape data as before (step S15) upon re-execution of the operations shown in Fig. 4, the second computer 120 selects, as the most appropriate tool ID, the same tool ID as the one that was selected by the user before (this tool ID is recorded on the storage device 121) at step S17.

## Claims

1. A machining system comprising:
a machining device (1) for picking up one of a plurality of cutting tools (53), each of cutting tools (53) held in respective one of a plurality of storage spaces (81) and machining a workpiece (2) with the picked-up cutting tool (53);
an operation control device (110) for controlling the machining device (1); and
a tool path generator (120) for generating tool path data for causing the machining device (1) to perform a machining operation;
the operation control device (110) comprising:
receiving means for receiving a tool identifier with the tool identifier correlated to one of storage space identifiers, each of the tool identifiers being assigned to a respective one of the plurality of cutting tools (53), each of the storage space identifiers being assigned to a respective one of the plurality of storage spaces (81); and
correlation table creating means for creating a correlation table in which the tool identifiers received by the receiving means are correlated with the storage space identifiers, respectively;
the tool path generator (120) comprising:
first acquisition means for acquiring the correlation table created by the correlation table creating means;
second acquisition means for acquiring shape data and a machining condition for the workpiece (2);
generating means for generating the tool path data based on the shape data and the machining condition;
selecting means for selecting, based on the shape data and the machining condition, a tool identifier of the most appropriate tool from among the tool identifiers in the correlation table acquired by the first acquisition means; and
designating means for designating, as a designated identifier, the storage space identifier correlated in the correlation table to the tool identifier selected by the selecting means,
wherein the plurality of storage spaces (81) are disposed on a magazine, the workpiece (2) is held by a holder, the magazine is closely positioned to the holder, and the one of a plurality of cutting tools (53) is attached to a tool holder (50), wherein the direction in which the cutting tool (53) is attached to the tool holder (50) is the same as the direction in which tools are stored in the magazine.

2. The machining system according to Claim 1, wherein
the tool path generator (120) further comprises list generating means for generating a list of the tool identifiers for all cutting tools (53) registered; and
a tool identifier assigned to a respective one of the plurality of cutting tools (53) is received by the receiving means from the list generated by the list generating means.

3. The machining system according to Claim 1 or 2, wherein a cutting tool (53) in a storage space assigned with the same storage space identifier as the designated identifier designated by the designating means is picked up by the machining device (1).

4. A computer-implemented method that designates, to a machining device (1) for picking up one of a plurality of cutting tools (53), each of cutting tools (53) being held in respective one of a plurality of storage spaces (81) and machining a workpiece (2) with the picked-up cutting tool (53), one storage space from which a cutting tool (53) is picked up among the plurality of storage spaces (81), comprising:
acquiring a correlation table in which the storage space identifiers assigned to the plurality of storage spaces (81) are correlated with the tool identifiers assigned to the plurality of cutting tools (53);
acquiring shape data and a machining condition for the workpiece (2);
selecting, based on the shape data and the machining condition, a tool identifier of the most appropriate tool from among the tool identifiers in the correlation table; and
designating, as a designated identifier, the storage space identifier correlated in the correlation table to the tool identifier of the most appropriate tool selected by the selecting means
wherein the plurality of storage spaces (81) are disposed on a magazine, the workpiece (2) is held by a holder, and the magazine is closely positioned to the holder, the one of a plurality of cutting tools (53) is attached to a tool holder (50), wherein the direction in which the cutting tool (53) is attached to the tool holder (50) is the same as the direction in which tools are stored in the magazine.

5. The computer-implemented method according to Claim 4, wherein the method includes a step of generating a list of the tool identifiers for all cutting tools (53) registered.

## Patentansprüche

1. Ein Bearbeitungssystem umfassend:
eine Bearbeitungsvorrichtung (1) zum Aufnehmen eines aus einer Vielzahl von Schneidwerkzeugen (53), wobei jedes Schneidwerkzeug (53) in einem entsprechenden aus einer Vielzahl von Speicherplätzen (81) gehalten wird, und zum Bearbeiten eines Werkstücks (2) mit dem aufgenommenen Schneidwerkzeug (53);
eine Betriebssteuerungsvorrichtung (110) zum Steuern der Bearbeitungsvorrichtung (1); und
einen Werkzeugweggenerator (120) zum Erzeugen von Werkzeugwegdaten, um die Bearbeitungsvorrichtung (1) zu veranlassen, einen Bearbeitungsvorgang durchzuführen;
wobei die Betriebssteuerungsvorrichtung (110) umfasst:
Empfangsmittel zum Empfangen einer Werkzeugkennung, wobei die Werkzeugkennung mit einer von Speicherplatzkennungen korreliert ist, wobei jede der Werkzeugkennungen einem jeweiligen aus der Vielzahl von Schneidwerkzeugen (53) zugeordnet ist, wobei jede der Speicherplatzkennungen einem jeweiligen aus der Vielzahl von Speicherplätzen (81) zugeordnet ist; und
eine Korrelationstabellen-Erzeugungseinrichtung zum Erzeugen einer Korrelationstabelle, in der die von dem Empfangsmittel empfangenen Werkzeugkennungen jeweils mit den Speicherplatzkennungen korreliert werden;
der Werkzeugweggenerator (120) umfasst:
eine erste Erfassungseinrichtung zum Erfassen der von der Korrelationstabellen-Erzeugungseinrichtung erzeugten Korrelationstabelle;
eine zweite Erfassungseinrichtung zum Erfassen von Formdaten und einer Bearbeitungsbedingung für das Werkstück (2);
eine Erzeugungseinrichtung zum Erzeugen der Werkzeugwegdaten auf der Grundlage der Formdaten und der Bearbeitungsbedingung;
eine Auswahleinrichtung zum Auswählen, basierend auf den Formdaten und der Bearbeitungsbedingung, einer Werkzeugkennung des geeignetsten Werkzeugs aus den Werkzeugkennungen in der Korrelationstabelle, die durch die erste Erfassungseinrichtung erfasst wurde; und
eine Bestimmungseinrichtung zum Bestimmen der Speicherplatzkennung, die in der Korrelationstabelle mit der durch die Auswahleinrichtung ausgewählten Werkzeugkennung korreliert ist, als eine bestimmte Kennung, wobei
die mehreren Speicherplätze (81) auf einem Magazin angeordnet sind, das Werkstück (2) von einem Halter gehalten wird, das Magazin eng an dem Halter positioniert ist und das eine von mehreren Schneidwerkzeugen (53) an einem Werkzeughalter (50) angebracht ist, wobei die Richtung, in der das Schneidwerkzeug (53) an dem Werkzeughalter (50) angebracht ist, die gleiche ist wie die Richtung, in der Werkzeuge in dem Magazin gespeichert sind.

2. Das Bearbeitungssystem gemäß Anspruch 1, wobei
der Werkzeugweggenerator (120) ferner Listenerzeugungsmittel zum Erzeugen einer Liste der Werkzeugkennungen für alle registrierten Schneidwerkzeuge (53) umfasst; und
eine Werkzeugkennung, die einem jeweiligen aus der Vielzahl von Schneidwerkzeugen (53) zugeordnet ist, von dem Empfangsmittel aus der von der Listenerzeugungseinrichtung erzeugten Liste empfangen wird.

3. Das Bearbeitungssystem gemäß Anspruch 1 oder 2, wobei
ein Schneidwerkzeug (53) in einem Speicherplatz, dem dieselbe Speicherplatzkennung zugeordnet ist wie die durch die Bestimmungseinrichtung festgelegte Kennung, von der Bearbeitungsvorrichtung (1) aufgenommen wird.

4. Ein computerimplementiertes Verfahren, das einer Bearbeitungsvorrichtung (1) zum Aufnehmen eines aus einer Vielzahl von Schneidwerkzeugen (53), wobei jedes Schneidwerkzeug (53) in einem entsprechenden aus einer Vielzahl von Speicherplätzen (81) gehalten wird, und zum Bearbeiten eines Werkstücks (2) mit dem aufgenommenen Schneidwerkzeug (53) einen Speicherplatz zuweist, aus dem ein Schneidwerkzeug (53) aus der Vielzahl von Speicherplätzen (81) aufgenommen wird, umfassend:
Erfassen einer Korrelationstabelle, in der die der Mehrzahl von Speicherplätzen (81) zugeordneten Speicherplatzkennungen mit den der Mehrzahl von Schneidwerkzeugen (53) zugeordneten Werkzeugkennungen korreliert werden;
Erfassen von Formdaten und einer Bearbeitungsbedingung für das Werkstück (2);
Auswählen, basierend auf den Formdaten und der Bearbeitungsbedingung, einer Werkzeugkennung des am besten geeigneten Werkzeugs aus den Werkzeugkennungen in der Korrelationstabelle; und
Bestimmen der Speicherplatzkennung, die in der Korrelationstabelle mit der Werkzeugkennung des am besten geeigneten Werkzeugs korreliert ist, das durch die Auswahleinrichtung ausgewählt wurde, als eine bestimmte Kennung, wobei
die mehreren Speicherplätze (81) auf einem Magazin angeordnet sind, das Werkstück (2) von einem Halter gehalten wird und das Magazin eng an dem Halter positioniert ist, das eine von mehreren Schneidwerkzeugen (53) an einem Werkzeughalter (50) angebracht ist, wobei die Richtung, in der das Schneidwerkzeug (53) an dem Werkzeughalter (50) angebracht ist, die gleiche ist wie die Richtung, in der Werkzeuge in dem Magazin gespeichert sind.

5. Das computerimplementiertes Verfahren gemäß Anspruch 4, wobei
das Verfahren einen Schritt der Erzeugung einer Liste der Werkzeugkennungen für alle registrierten Schneidwerkzeuge (53) umfasst.

## Revendications

1. Système d'usinage comprenant :
un dispositif d'usinage (1) pour saisir l'un d'une pluralité d'outils de coupe (53), chacun des outils de coupe (53) étant maintenu dans l'un respectif d'une pluralité d'espaces de stockage (81) et usiner une pièce (2) avec l'outil de coupe saisi (53) ;
un dispositif de commande d'opération (110) pour commander le dispositif d'usinage (1) ; et
un générateur de trajectoire d'outil (120) pour générer des données de trajectoire d'outil pour amener le dispositif d'usinage (1) à effectuer une opération d'usinage ;
le dispositif de commande d'opération (110) comprenant :
des moyens de réception pour recevoir un identificateur d'outil avec l'identificateur d'outil corrélé à l'un d'identificateurs d'espace de stockage, chacun des identificateurs d'outil étant attribué à l'un respectif de la pluralité d'outils de coupe (53), chacun des identificateurs d'espace de stockage étant attribué à l'un respectif de la pluralité d'espaces de stockage (81) ; et
des moyens de création de table de corrélation pour créer une table de corrélation dans laquelle les identificateurs d'outil reçus par les moyens de réception sont corrélés aux identificateurs d'espace de stockage, respectivement ;
le générateur de trajectoire d'outil (120) comprenant :
des premiers moyens d'acquisition pour acquérir la table de corrélation créée par les moyens de création de table de corrélation ;
des seconds moyens d'acquisition pour acquérir des données de forme et une condition d'usinage pour la pièce (2) ;
des moyens de génération pour générer les données de trajectoire d'outil sur la base des données de forme et de la condition d'usinage ;
des moyens de sélection pour sélectionner, sur la base des données de forme et de la condition d'usinage, un identificateur d'outil de l'outil le plus approprié parmi les identificateurs d'outil dans la table de corrélation acquise par les premiers moyens d'acquisition ; et
des moyens de désignation pour désigner, en tant qu'identificateur désigné,
l'identificateur d'espace de stockage corrélé dans la table de corrélation à l'identificateur d'outil sélectionné par les moyens de sélection,
dans lequel la pluralité d'espaces de stockage (81) sont disposés sur un magasin, la pièce (2) est maintenue par un support, le magasin est positionné à proximité du support, et ledit l'un d'une pluralité d'outils de coupe (53) est fixé à un porte-outil (50),
dans lequel la direction dans laquelle l'outil de coupe (53) est fixé au porte-outil (50) est la même que la direction dans laquelle les outils sont stockés dans le magasin.

2. Système d'usinage selon la revendication 1, dans lequel
le générateur de trajectoire d'outil (120) comprend en outre des moyen de génération de liste pour générer une liste des identificateurs d'outil pour tous les outils de coupe (53) enregistrés ; et
un identificateur d'outil attribué à l'un respectif de la pluralité d'outils de coupe (53) est reçu par les moyens de réception à partir de la liste générée par les moyens de génération de liste.

3. Système d'usinage selon la revendication 1 ou 2, dans lequel un outil de coupe (53) dans un espace de stockage attribué au même identificateur d'espace de stockage que l'identificateur désigné qui est désigné par les moyens de désignation est saisi par le dispositif d'usinage (1).

4. Procédé mis en oeuvre par ordinateur qui désigne, à un dispositif d'usinage (1) destiné à saisir l'un d'une pluralité d'outils de coupe (53), chacun des outils de coupe (53) étant maintenu dans l'un respectif d'une pluralité d'espaces de stockage (81) et à usiner une pièce (2) avec l'outil de coupe saisi (53), un espace de stockage à partir duquel un outil de coupe (53) est saisi parmi la pluralité d'espaces de stockage (81), comprenant les étapes consistant à :
acquérir une table de corrélation dans laquelle les identificateurs d'espace de stockage affectés à la pluralité d'espaces de stockage (81) sont corrélés aux identificateurs d'outils attribués à la pluralité d'outils de coupe (53) ;
acquérir des données de forme et une condition d'usinage pour la pièce (2) ;
sélectionner, sur la base des données de forme et de la condition d'usinage, un identificateur d'outil de l'outil le plus approprié parmi les identificateurs d'outil dans la table de corrélation ; et
désigner, en tant qu'identificateur désigné, l'identificateur d'espace de stockage corrélé dans la table de corrélation à l'identificateur d'outil de l'outil le plus approprié sélectionné par les moyens de sélection
dans lequel la pluralité d'espaces de stockage (81) sont disposés sur un magasin, la pièce (2) est maintenue par un support, et le magasin est positionné à proximité du support, ledit l'un d'une pluralité d'outils de coupe (53) est fixé à un porte-outil (50), dans lequel la direction dans laquelle l'outil de coupe (53) est fixé au porte-outil (50) est la même que la direction dans laquelle les outils sont stockés dans le magasin.

5. Procédé mis en oeuvre par ordinateur selon la revendication 4, dans lequel le procédé comprend une étape de génération d'une liste des identificateurs d'outil pour tous les outils de coupe (53) enregistrés.
